# EUROPÄISCHE PATENTANMELDUNG

(11) **EP 1 293 694 A1**
(43) Veröffentlichungstag der Anmeldung: **19.03.2003**
(21) Anmeldenummer: 02015420.9
(22) Anmeldetag: 11.07.2002
(51) Int. Cl.: F16D 13/60, F16D 13/64

(54) **Kupplung, vorzugsweise Mehrscheibenkupplung**

(30) Priorität: 15.09.2001 DE 10145638
(71) Anmelder: Dr.Ing. h.c.F. Porsche Aktiengesellschaft, 70435 Stuttgart (DE)
(72) Erfinder: Herberg, Klaus, 74336 Brackenheim (DE)

(57) **Zusammenfassung**

Diese Kupplung (2) der Reibungsgattung zwischen einer Brennkraftmaschine und einem Getriebe ist in ein Kraftfahrzeug bspw. der Hochleistungsklasse eingebaut und umfasst Antriebsreibscheiben (4,5,6) und Übertragungsreibscheiben (7,8).

Zur Erhöhung der Belastbarkeit der Antriebsreibscheiben und der Übertragungsreibscheiben bestehen zumindest die Antriebsreibscheiben aus einem Werkstoff mit hoher Verschleißfestigkeit und Drehzahlfestigkeit.

## Beschreibung

Die Erfindung betrifft eine Kupplung, vorzugsweise Mehrscheibenkupplung der Reibungsgattung zwischen einer Brennkraftmaschine und einem Getriebe nach dem Oberbegriff des Patenanspruchs 1.

Eine bekannte Mehrscheibenkupplung, DE 33 26 409 A1, umfasst mehrere nebeneinander angeordnete Reibscheiben, die nur auf einer Seite mit einer Reibschicht versehen sind.

Aus der US 5,029,686 gehen Kupplungsscheiben hervor, zwischen denen Separierscheiben aus Stahl vorgesehen sind. Die Separierscheiben sind mit einer Schicht aus Keramik versehen.

In der US 5,452,784 wird eine Mehrscheibenkupplung behandelt, deren Antriebsreibscheiben und Übertragungsreibscheiben auf den einander zugekehrten Flächen einen dünnen Film aus Keramik aufweisen

Bei automatisch arbeitenden Anfahrkupplungen in Hochleistungsfahrzeugen, die z.B. an Wettbewerben der Formel 1 teilnehmen, werden die Antriebsreibscheiben und die Übertragungsreibscheiben bezüglich Verschleiß und Drehzahl hochbelastet, was die Lebensdauer dieser aus Karbon bestehenden Scheiben beeinträchtigt.

Es ist daher Aufgabe der Erfindung die Belastbarkeit der Antriebsreibscheiben und der Übertragungsreibscheiben deutlich zu erhöhen.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Antriebsreibscheiben und die Übertragungsreibscheiben, weil aus geeignetem Werkstoff bestehend, den insbesondere beim Betrieb automatischer Anfahrkupplungen auftretenden hochgradigen Belastungen - Drehzahl und Verschleiß - gut standhält. Als sehr geeigneter Werkstoff für die Antriebsreibscheiben und die Übertragungsreibscheiben bietet sich vor allem gewebeverstärkte Keramik an. Dabei hat sich als vorteilhaft erwiesen, wenn jede einzelne Scheibe insgesamt aus dem zuletzt genannten Werkstoff besteht, und zwar ohne Deckschicht im Bereich der Reibflächen.

In der Zeichnung wird ein Ausführungsbeispiel der Erfindung gezeigt, das nachstehend näher beschrieben ist.

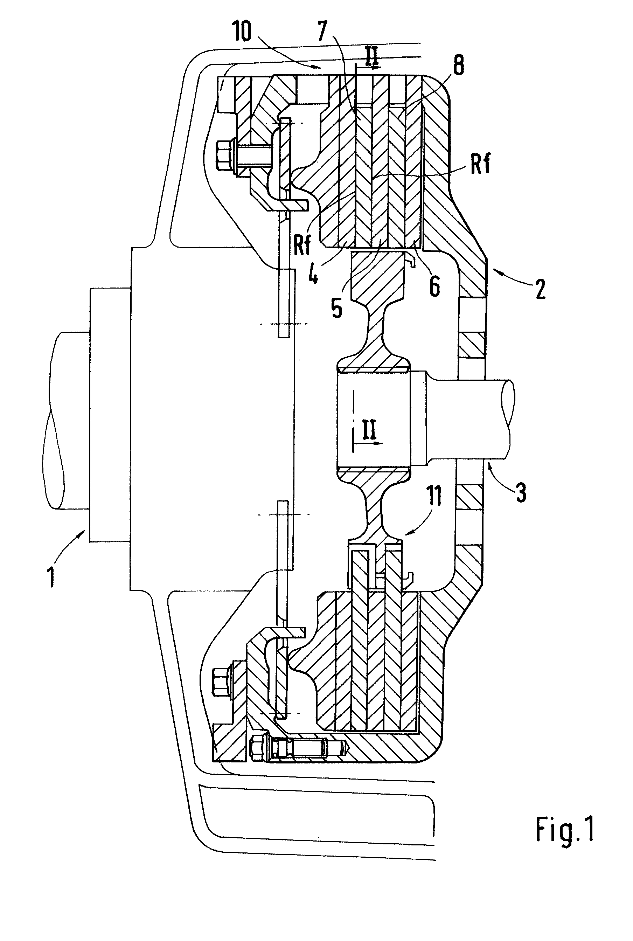

Es zeigen
- Fig.1: einen Längsschnitt durch eine Kupplung, angeordnet zwischen einer Brennkraftmaschine und einem Schaltgetriebe,
- Fig. 2: einen Schnitt nach der Linie II-II der Fig.1.

Von einer in ein nicht gezeigtes Kraftfahrzeug eingebauten Brennkraftmaschine ist lediglich eine Kurbelwelle 1 dargestellt, die unter Vermittlung einer Kupplung 2 der Reibungsgattung mit einem Getriebe zusammenarbeitet. Das Getriebe, das im Einzelnen nicht näher ausgeführt ist, ist mit einer Eingangswelle 3 an die Kupplung 2 angeschlossen.

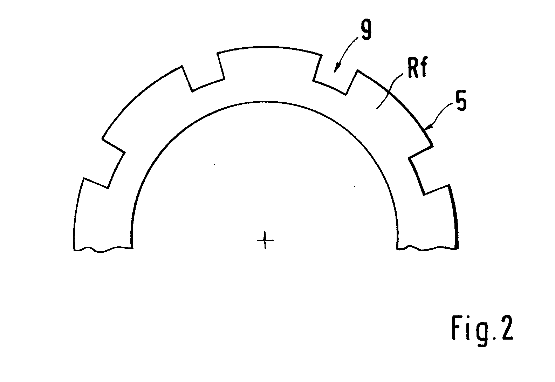

Die Kupplung 2 ist als Mehrscheibenkupplung ausgebildet und umfasst Antriebsreibscheiben 4, 5, 6 sowie Übertragungsreibscheiben 7, 8. Jede Antriebsreibscheibe z.B. 5 wird durch ein rotationssymmetrisches Element gebildet, weist Mitnehmertaschen 9 - Fig. 2 - auf und ist in einem Kupplungsgehäuse 10 axial verschiebbar gelagert. Die einzelnen Antriebsreibscheiben 7, 8 sind ähnlich ausgeführt, jedoch sind sie mittels Mitnehmerzapfen - nicht gezeigt - auf einer Kupplungsnabe 11 axial beweglich angeordnet.

Die Antriebsreibscheiben 4,5 6 sowie die Übertragungsreibscheiben 7,8 sind aus einem Werkstoff mit hoher Verschleißfestigkeit und Drehzahlfestigkeit hergestellt, die an Reibflächen Rf keine Deckschicht aufweisen. Dabei können sowohl die Antriebsreibscheiben 4,5,6 wie auch die Übertragungsreibscheiben 7,8 aus dem gleichen Werkstoff bestehen. Schließlich haben Untersuchungen gezeigt, dass für die Antriebsreibscheiben 4,5,6 und die Übertragungsreibscheiben 7,8 gewebeverstärkte Keramik ausgezeichnet geeignet ist.

Derart gestaltete Antriebsreibscheiben 4,5,6 und Übertragungsreibscheiben 7,8 und können gezielt in automatische Anfahrkupplungen von Kraftfahrzeugen eingesetzt werden, deren Brennkraftmaschinen bezüglich Drehzahlen und Leistung Höchstwerte abgeben, wodurch besagte Antriebsscheiben und Übertragungsscheiben extrem beansprucht werden.

## Patentansprüche

1. Kupplung, vorzugsweise Mehrscheibenkupplung der Reibungsgattung zwischen einer Brennkraftmaschine und einem Getriebe, die in ein Kraftfahrzeug bspw. der Hochleistungskategorie eingebaut ist und Antriebsreibscheiben und Übertragungsreibscheiben umfasst, **dadurch gekennzeichnet, dass** zumindest die Antriebsreibscheiben (4,5,6) aus einem Werksstoff mit hoher Verschleißfestigkeit und Drehzahlfestigkeit bestehen.

2. Kupplung nach Anspruch 1, **dadurch gekennzeichnet**, das die Antriebsreibscheiben (4,5,6) und die Übertragungsreibscheiben (7,9) aus dem Werkstoff mit hoher Verschleißfestigkeit und Drehzahlfestigkeit bestehen.

3. Kupplung nach den Ansprüchen 1 und 2, **dadurch gekennzeichnet, dass** zumindest die Antriebsreibscheiben (4,5,6) aus gewebeverstärkter Keramik bestehen.

4. Kupplung nach den Ansprüchen 1 und 2, **dadurch gekennzeichnet, dass** die Antriebsreibscheiben (4,5,6) und die Übertragungsreibscheiben (7,8) aus gewebeverstärkter Keramik bestehen.

5. Kupplung nach einem oder mehreren der vorangehenden Ansprüche, **dadurch gekennzeichnet, dass** die Antriebsreibscheiben (4,5,6) und die Übertragungsreibscheiben (7,8) aus dem gleichen Werkstoff hergestellt sind.

6. Kupplung nach einem oder mehreren der vorangehenden Ansprüche, **dadurch gekennzeichnet, dass** Reibflächen (Rf) der Antriebsreibscheiben (4,5,6) und der Übertragungsreibscheiben (7,8) frei von Deckschichten sind.
